# EUROPÄISCHE PATENTSCHRIFT

(11) **EP 2 195 212 B1**
(45) Veröffentlichungstag und Bekanntmachung des Hinweises auf die Patenterteilung: **05.09.2018**
(21) Anmeldenummer: 08804803.8
(22) Anmeldetag: 26.09.2008
(51) Int. Cl.: B60S 1/04

(54) **WISCHANLAGE, VERFAHREN ZUR MONTAGE EINER WISCHANLAGE SOWIE KRAFTFAHRZEUG**
WIPER SYSTEM, METHOD FOR THE INSTALLATION OF A WIPER SYSTEM, AND MOTOR VEHICLE
SYSTÈME ESSUIE-GLACE, PROCÉDÉ DE MONTAGE D'UN SYSTÈME ESSUIE-GLACE, ET VÉHICULE AUTOMOBILE

(30) Priorität: 02.10.2007 DE 102007047126
(43) Veröffentlichungstag der Anmeldung: 16.06.2010
(73) Patentinhaber: Robert Bosch GmbH, 70442 Stuttgart (DE)
(72) Erfinder: RITT, Jean-Marc, F-67000 Strasbourg (FR)
(86) Internationale Anmeldenummer: PCT/EP2008/062926
(87) Internationale Veröffentlichungsnummer: WO 2009/047136

(56) Entgegenhaltungen:
- EP-A- 1 348 614
- EP-A- 1 375 275
- EP-A- 1 407 946

## Beschreibung

### Stand der Technik

Die Erfindung betrifft eine Wischanlage zur Montage in einem Kraftfahrzeug gemäß dem Oberbegriff des Anspruchs 1, ein Verfahren zur Montage einer Wischanlage gemäß Anspruch 6 sowie ein Kraftfahrzeug gemäß Anspruch 8.

Es sind Wischanlagen für Kraftfahrzeuge bekannt, die mit in vertikaler Richtung orientierten Fixierschrauben an einer Fahrzeugkarosserie fixierbar sind. In der Regel liegen diese Wischanlagen auf den die Fixierschrauben aufnehmenden Karosserieteilen während der Montage auf, so dass die Wischanlagen nicht mit Hilfe separater Halteeinrichtungen in der Montageposition gehalten werden müssen.

Daneben sind Wischanlagen bekannt, die mit sich in horizontaler Richtung erstreckenden Fixierschrauben an einer Kraftfahrzeugkarosserie festlegbar sind. Diese Wischanlagen müssen während der Montage entweder von Hand oder mit Hilfe einer geeigneten Halteeinrichtung in der Montageposition gehalten werden, um ein Einschrauben der Fixierschrauben zu ermöglichen. Daher ist die Montage derartiger Wischanlagen vergleichsweise aufwendig.

Die EP 1 375 275 A2 beschreibt eine Getriebe-Antriebs-Einheit zum Verstellen von beweglichen Teilen in einem Kraftfahrzeug, die ein Gehäuseteil aufweist, an dem ein Rastelement angeordnet ist, das mit einem Aufnahmeelement einer Verstelleinheit wechselwirkt und die Montage der Getriebe-Antriebs-Einheit vereinfacht.

Die EP 1 348 614 A1 beschreibt ein Verfahren zum Zusammenbau eines Ausrüstungsmoduls und eines Verkleidungselements auf einem Strukturelement eines Kraftfahrzeugs, bei dem das Ausrüstungsmodul zunächst provisorisch mit dem Verkleidungselement und anschließend dauerhaft mit dem Strukturelement verbunden wird.

### Offenbarung der Erfindung

### Technische Aufgabe

Der Erfindung liegt die Aufgabe zugrunde, eine Wischanlage vorzuschlagen, die unabhängig von der Ausbildung der Befestigungsmittel zur endgültigen Montage der Wischanlage an einer Kraftfahrzeugkarosserie einfach montierbar ist. Ferner besteht die Aufgabe darin, ein entsprechendes Montageverfahren sowie ein mit einer derartigen Wischanlage ausgestattetes Kraftfahrzeug vorschlagen.

### Technische Lösung

Diese Aufgabe wird hinsichtlich der Wischanlage mit den Merkmalen des Anspruchs 1, hinsichtlich des Montageverfahrens mit den Merkmalen des Anspruchs 6 und hinsichtlich des Kraftfahrzeugs mit den Merkmalen des Anspruchs 8 gelöst. Vorteilhafte Weiterbildungen der Erfindung sind in den Unteransprüchen angegeben. Zur Vermeidung von Wiederholungen sollen rein vorrichtungsgemäß offenbarte Merkmale auch als verfahrensgemäß offenbart gelten und beanspruchbar sein. Ebenso sollen rein verfahrensgemäß offenbarte Merkmale als vorrichtungsgemäß offenbart gelten und beanspruchbar sein.

Der Erfindung liegt der Gedanke zugrunde, die Wischanlage derart auszubilden, dass diese ohne Zuhilfenahme separater Haltemittel vorläufig in der Montageposition formschlüssig am Kraftfahrzeug festlegbar ist. Die Wischanlage erhält also Vorfixiermittel, die derart ausgebildet sind, dass mit diesen ein Formschluss entweder unmittelbar mit der Kraftfahrzeugkarosserie oder mit einem an der Kraftfahrzeugkarosserie festgelegten Bauteil, beispielsweise einem Befestigungsblech, für die Wischanlage herstellbar ist. Durch die Vorfixierbarkeit einer nach dem Konzept der Erfindung ausgebildeten Wischanlage kann auf eine separate Halteeinrichtung zur Positionierung und Halterung der Wischanlage in der Montageposition verzichtet werden. Ebenso kann der Monteur, falls die Wischanlage von Hand im Kraftfahrzeug montiert wird, beide Hände zur endgültigen Montage, d. h. Fixierung der Wischanlage am Kraftfahrzeug, nutzen. Darüber hinaus wird die Positionierung der Wischanlage im Kraftfahrzeug auf Grund der Ausbildung eines (vorläufigen) Formschlusses zwischen Wischanlage und Kraftfahrzeugkarosserie erleichtert. Die nach dem Konzept der Erfindung ausgebildete Wischanlage kann mit beliebigen Befestigungsmitteln endgültig an der Kraftfahrzeugkarosserie fixiert werden. Besonders geeignet ist eine nach dem Konzept der Erfindung ausgebildete Wischanlage für die Montage im Kraftfahrzeug mit Hilfe von sich im Wesentlichen in horizontaler Richtung erstreckenden Fixierschrauben oder Steckverbindern.

In Weiterbildung der Erfindung ist mit Vorteil vorgesehen, dass an der Wischanlage, vorzugsweise an einem Formteil der Wischanlage, zur endgültigen Montage im Kraftfahrzeug mindestens eine Fixieröffnung zur Aufnahme einer Fixierschraube vorgesehen ist. Um eine exakte, endgültige Positionierung der Wischanlage im Kraftfahrzeug realisieren zu können, ist die mindestens eine Fixierschraube bevorzugt als Zentrierschraube ausgebildet. Besonders bevorzugt ist eine Ausführungsform, bei der die Wischanlage mindestens zwei in Längsrichtung der Wischanlage beabstandete, vorzugsweise endseitige, Fixieröffnungen zur Aufnahme jeweils einer Fixierschraube aufweist.

Von besonderem Vorteil ist eine Ausführungsform, bei der die Längsmittelachse der mindestens einen Fixieröffnung oder von dem mindestens einen Steckverbinder im montierten Zustand der Wischanlage winklig zur Vertikalen verläuft. Vorzugsweise verläuft die Längsmittelachse der Fixieröffnung bzw. des Steckverbinders unter einem Winkel aus einem Wertebereich zwischen etwa 45° und etwa 90° zur Vertikalen. Bevorzugt liegt die Längsmittelachse in einer Horizontalebene. Aufgrund der Ausbildung der Wischanlage mit Vorfixiermitteln ist es auch bei derartig ausgebildeten Befestigungsmitteln zur endgültigen Montage möglich, eine einfache Montage der Wischanlage am Kraftfahrzeug zu realisieren. Erfindungsgemäß ist eine Ausführungsform, bei der die Vorfixiermittel derart mit den Befestigungsmitteln zusammenwirken, d. h. die Vorfixiermittel derart ausgebildet und/oder angeordnet sind, dass die Vorfixiermittel bei endgültig an der Kraftfahrzeugkarosserie montierter Wischanlage die Kraftfahrzeugkarosserie oder ein an dieser festgelegtes Bauteil nicht kontaktieren. Bei dieser Ausführungsform kommt den Vorfixiermitteln im endmontierten Zustand der Wischanlage keinerlei Haltefunktion mehr zu. Diese wird aus Gründen einer exakten Positionierung ausschließlich von den (endgültigen) Befestigungsmitteln, insbesondere von mindestens zwei Fixierschrauben, übernommen.

Eine überraschend einfache und elegante Vorfixierbarkeit wird erhalten, wenn die Vorfixiermittel mindestens ein Hakenelement umfassen, das formschlüssig mit einer entsprechenden Ausnehmung in der Kraftfahrzeugkarosserie oder in dem an der Kraftfahrzeugkarosserie festgelegten Bauteil zusammenwirkt. Die Herstellung entsprechender Hakenelemente ist fertigungstechnisch einfach und erfolgt bevorzugt an einem mindestens eine Fixieröffnung aufweisenden Formteil. Selbstverständlich ist es möglich, ein entsprechendes Hakenelement auch an der Kraftfahrzeugkarosserie oder an dem an der Kraftfahrzeugkarosserie festgelegten Bauteil anzuordnen, das dann mit einer entsprechenden Ausnehmung an/in der Wischanlage, vorzugsweise an/in einem Formteil der Wischanlage, zusammenwirkt. Bei der Ausbildung der Vorfixiermittel als Hakenelement, muss die Wischanlage mit ihrem mindestens einem Hakenelement lediglich in die Kraftfahrzeugkarosserie oder dem an dieser festgelegten Bauteil eingehängt werden. Die Lage des Hakenelementes und der Aufnahmeöffnung sind derart aufeinander abgestimmt, dass im vorfixierten Zustand der Wischanlage eine einfache Montage möglich ist. Insbesondere fluchtet im vorfixierten Zustand mindestens eine Fixieröffnung an der Wischanlage mit einer Innengewindeöffnung in der Kraftfahrzeugkarosserie bzw. dem an dieser festgelegten Bauteil, wobei im vorfixierten Zustand bevorzugt die Längsmittelachse der Fixieröffnung (etwas) beabstandet von der Längsmittelachse der Innengewindeöffnung ist. Diese Längsmittelachsen kommen mit Vorteil erst durch Eindrehen der mindestens einen Fixierschraube zur Deckung, wodurch wiederum im endmontierten Zustand die Vorfixiermittel der Wischanlage die Kraftfahrzeugkarosserie nicht (mehr) berühren.

Von besonderem Vorteil ist eine Ausführungsform der Wischanlage, bei der das mindestens eine Hakenelement der Vorfixiermittel derart ausgebildet ist, dass die Vorfixierung der Wischanlage hängend erfolgt. Dies kann dadurch realisiert werden, dass das Hakenelement zwei rechtwinklig zueinander angeordnete Hakenabschnitte aufweist, wobei der endseitige Hakenabschnitt mit seinem freien Ende in zumindest näherungsweise vertikaler Richtung nach unten zeigt.

Von besonderem Vorteil ist eine Ausführungsform, bei der die Vorfixiermittel mindestens zwei, auf einander gegenüberliegenden Längsseiten angeordnete Hakenelemente aufweisen. Bevorzugt sind diese Hakenelemente an einem (endseitigen) Formteil der Wischanlage angeordnet bzw. ausgebildet, in dem vorzugsweise auch mindestens eine Fixieröffnung zur Aufnahme einer Fixierschraube angeordnet ist. Werden zumindest näherungsweise gegenüberliegende, d. h. in einander entgegengesetzte Richtungen weisende Hakenelemente vorgesehen, eignet sich das Formteil sowohl zur Montage von linkslenkenden, als auch von rechtslenkenden Wischanlagen.

Die Erfindung führt auch auf ein Verfahren zur Montage einer Wischanlage. Dieses umfasst nach dem Konzept der Erfindung die Schritte eines zunächst vorläufigen Fixierens der Wischanlage an der Kraftfahrzeugkarosserie durch Herstellen eines Formschlusses mit der Kraftfahrzeugkarosserie oder einem an der Kraftfahrzeugkarosserie festgelegten Bauteil und einer abschließenden Endmontage der vorläufig an der Fahrzeugkarosserie formschlüssig angebundenen Wischanlage. Bevorzugt erfolgt die Endmontage durch Eindrehen mindestens zweier in Längsrichtung der Wischanlage beabstandeter, vorzugsweise zumindest näherungsweise in horizontaler Richtung erstreckenden, Fixierschrauben bzw. durch das Einstecken entsprechend orientierter Steckverbinder (Rastverbindung).

Die Erfindung führt weiterhin auf ein Kraftfahrzeug, an dessen Kraftfahrzeugkarosserie eine zuvor beschriebene Wischanlage endmontiert ist.

Von besonderem Vorteil ist eine Ausführungsform des Kraftfahrzeugs, bei der dessen Kraftfahrzeugkarosserie oder ein an der Kraftfahrzeugkarosserie festgelegtes Bauteil, sich vorzugsweise in Querrichtung des Kraftfahrzeugs erstreckendes, Langloch zur Aufnahme mindestens eines Hakenelementes der Wischanlage aufweist. Durch Vorsehen des mindestens einen Langloches ist ein Ausgleich von Fertigungstoleranzen der Wischanlage möglich. Bevorzugt ist jedem Hakenelement ein entsprechendes Langloch zugeordnet.

### Kurze Beschreibung der Zeichnungen

Weitere Vorteile und Einzelheiten der Erfindung ergeben sich aus der nachfolgenden Beschreibung bevorzugter Ausführungsbeispiele, sowie anhand der Zeichnungen. Diese zeigen in:
- Fig. 1:: eine perspektivische Teilansicht einer Wischanlage in Alleinstellung,
- Fig. 2:: eine perspektivische Ansicht der Wischanlage eines an einer nicht gezeigten Fahrzeugkarosserie festgelegten Bauteils (Befestigungsblech) vor der Vorfixierung,
- Fig. 3:: eine vorfixierte Wischanlage und
- Fig. 4: eine endmontierte Wischanlage.

### Ausführungsform der Erfindung

In den Figuren sind gleiche Bauteile und Bauteile mit der gleichen Funktion mit den gleichen Bezugszeichen gekennzeichnet.

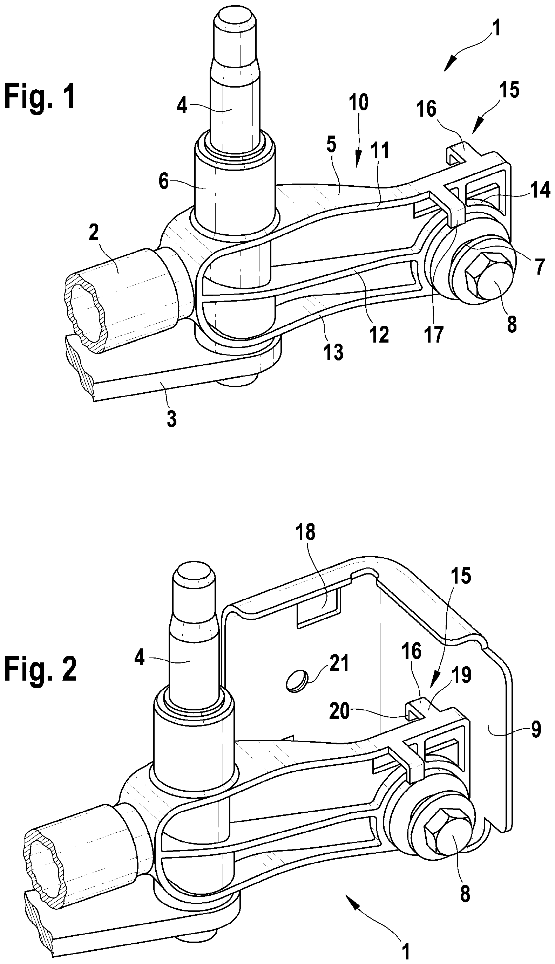

In Fig. 1 ist ein Endabschnitt einer Wischanlage 1 für ein Kraftfahrzeug gezeigt. Ein nicht dargestellter, in Längsrichtung der Wischanlage beabstandeter Endabschnitt ist im Wesentlichen spiegelsymmetrisch zu dem gezeigten Endabschnitt ausgebildet. Die Wischanlage 1 umfasst ein Halterohr 2, an dem eine nicht gezeigte, an sich bekannte, Antriebsgetriebeeinheit mit einem elektrischen Antriebsmotor und einem Schneckengetriebe festgelegt ist, wobei das Schneckengetriebe mit einem Gestänge 3 zum pendelnden Antrieb zweier Wischerwellen 4, von denen in den Figuren nur eine einzige gezeigt ist, ausgebildet ist. Die Wischerwellen 4 dienen zur Aufnahme entsprechender Wischerarme mit Wischblättern, die auf der nicht gezeigten Kraftfahrzeugscheibe aufliegen. Bei der gezeigten Wischanlage 1 handelt es sich um eine Frontwischanlage.

Das Halterohr 2 ist endseitig fest verbunden mit einem Formteil 5, welches ein Lager 6 für die Wischerwelle 4 trägt. Das Formteil 5 ist mit einer Fixieröffnung 7 versehen, durch die eine als Zentrierschraube ausgebildete Fixierschraube 8 geführt ist. Die Fixierschraube 8 erstreckt sich in dem gezeigten Ausführungsbeispiel in horizontaler Richtung und dient zum endgültigen Fixieren der Wischanlage 1 an einem in Fig. 2 gezeigten Bauteil 9 (Befestigungsblech), welches an einer nicht gezeigten Fahrzeugkarosserie festgelegt ist.

Das Formteil 5 weist einen abschnittsweise in dem als Hohlrohr ausgebildeten Halterohr 2 aufgenommenen Befestigungsabschnitt 10 auf, der in drei im Wesentlichen parallel zueinander verlaufende Streben 11, 12, 13 übergeht. Die in der Zeichnungsebene unteren beiden Streben 12, 13 münden in einen Flächenabschnitt 14, in dem die Fixieröffnung 7 vorgesehen ist. Die in der Zeichnungsebene obere Strebe 11 ist in ihrem Endbereich oberhalb der Fixieröffnung 7 mit Vorfixiermitteln 15 ausgestattet. Diese erlauben eine formschlüssige Vorfixierung der Wischanlage 1 an dem Bauteil 9.

Wie aus den Figuren ersichtlich ist, umfassen die Vorfixiermittel 15 Hakenelemente 16, 17, die auf einander gegenüberliegenden Längsseiten der Wischanlage 1 angeordnet sind und sich in einander entgegengesetzte (Horizontal-) Richtungen erstrecken. In dem nicht gezeigten, in Längsrichtung beabstandeten, Endabschnitt der Wischanlage 1 sind ebenfalls zwei einander gegenüberliegende Hakenelemente (nicht gezeigt) vorgesehen.

Bei dem gezeigten Ausführungsbeispiel kommt nur das Hakenelement 16 und ein in die gleiche Richtung orientiertes, nicht gezeigtes Hakenelement an dem nicht gezeigten Endabschnitt zur Vorfixierung zum Einsatz. Das Hakenelement 17 und ein nicht gezeigtes, in die gleiche Richtung orientiertes Hakenelement ermöglichen die Fixierung einer unterschiedlich aufgebauten, nicht gezeigten, Wischanlage. Das Formteil 5 ist also sowohl mit linkslenkenden als auch mit rechtslenkenden Wischanlagen verwendbar.

Zur Vorfixierung wird das Hakenelement 16 in eine als Langloch ausgebildete Ausnehmung 18 in dem Bauteil 9 formschlüssig eingehängt. Um dies zu ermöglichen, weist das Hakenelement 16 (vgl. Fig. 2) zwei rechtwinklig zueinander verlaufende Hakenabschnitte 19, 20 auf, wobei der endseitige Hakenabschnitt 20 im Wesentlichen vertikal nach unten weist.

Durch die Ausbildung der Ausnehmung 18 als Langloch, das eine größere Breitenerstreckung hat als das Hakenelement 16, ist eine Relativverschiebung der Wischanlage 1 in Querrichtung zu der Kraftfahrzeugkarosserie und damit ein Ausgleich von Fertigungstoleranzen möglich.

In Fig. 2 ist die Wischanlage 1 vor der Vorfixierung mit Abstand zu dem Bauteil 9 gezeigt.

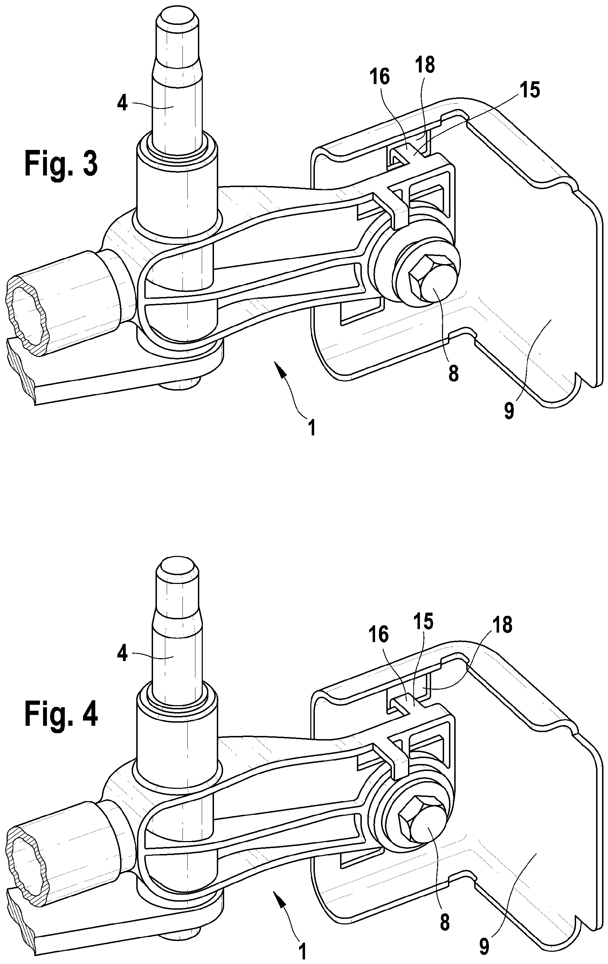

In Fig. 3 ist das Hakenelement 16 in der Ausnehmung 18 eingehängt, die Wischanlage 1 ist also formschlüssig an dem Bauteil 9 vorfixiert. In dieser Position kann die als Zentrierschraube ausgebildete Fixierschraube 8 in die in Fig. 2 gezeigte Innengewindeöffnung 21 in den Bauteil 9 eingeschraubt werden. Beim bzw. durch das Einschrauben der Fixierschraube 8 werden die Längsmittelachsen der Fixieröffnung 7 und der Innengewindeöffnung 21 zu Deckung gebracht, wodurch das Hakenelement 16 in der Zeichnungsebene (leicht) nach oben bewegt wird, also in dem in Fig. 4 gezeigten Endmontagezustand keinen Kontakt mehr zu dem Bauteil 9 des Kraftfahrzeugs hat. In der Endmontageposition wird die Wischanlage 1 folglich nur von den Fixierschrauben 8 gehalten, von denen lediglich eine gezeigt ist.

## Patentansprüche

1. Wischanlage zur Montage in einem Kraftfahrzeug mit mindestens einem Antriebsmotor und mit mindestens einer von dem Antriebsmotor angetriebenen Wischerwelle (4), wobei die Wischanlage (1) ein Formteil (5) umfasst, an dem Vorfixiermittel (15) vorgesehen sind, mit denen ein Formschluss mit einem an einer Kraftfahrzeugkarosserie festgelegten Bauteil (9) herstellbar ist, wobei das Bauteil (9) eine Innengewindeöffnung (21) und das Formteil (5) eine Fixieröffnung (7) aufweist, wobei die beiden Öffnungen (21, 7) jeweils eine Längsmittelachse aufweisen, wobei die Vorfixiermittel (15) mindestens ein Hakenelement (16, 17) zum formschlüssigen Zusammenwirken mit einer entsprechenden Ausnehmung (18) in dem an der Kraftfahrzeugkarosserie festgelegten Bauteil (9) aufweisen, **was einen vorfixierten Zustand bewirkt, dadurch gekennzeichnet, dass** die Vorfixiermittel (15) derart ausgebildet und/oder angeordnet sind, dass die Längsmittelachse der Fixieröffnung (7) im vorfixierten Zustand von der Längsmittelachse der Innengewindeöffnung (21) beanstandet ist, und dass die Vorfixiermittel im Endmontagezustand, nach einem endgültigen Fixieren der Wischanlage (1) an dem an der Kraftfahrzeugkarosserie festgelegten Bauteil (9), das an der Kraftfahrzeugkarosserie festgelegte Bauteil (9) nicht berühren.

2. Wischanlage nach Anspruch 1,
**dadurch gekennzeichnet,**
**dass** an der Wischanlage (1) zur endgültigen Montage mindestens eine Fixieröffnung (7) zum Durchführen einer, insbesondere als Zentrierschraube ausgebildeten, Fixierschraube (8) vorgesehen ist.

3. Wischanlage nach Anspruch 2,
**dadurch gekennzeichnet,**
**dass** eine Längsmittelachse der Fixieröffnung (7) im montierten Zustand der Wischanlage (1) unter einem Winkel, vorzugsweise unter einem Winkel aus einem Wertebereich zwischen etwa 45° und etwa 90°, vorzugsweise unter einem Winkel von etwa 90° zur Vertikalen verläuft.

4. Wischanlage nach einem der Ansprüche **1 oder 4,**
**dadurch gekennzeichnet,**
**dass** das Hakenelement (16, 17) einen im montierten Zustand in horizontaler Richtung weisenden ersten Hakenabschnitt (19) und einen rechtwinklig zu diesem angeordneten, nach unten weisenden, zweiten Hakenabschnitt (20) aufweist.

5. Wischanlage nach einem der Ansprüche **1 oder 4,**
**dadurch gekennzeichnet,**
**dass** die Vorfixiermittel (15) mindestens zwei auf einander gegenüberliegenden Längsseiten angeordnete Hakenelemente (16, 17) aufweist.

6. Verfahren zur Montage einer Wischanlage nach einem der vorhergehenden Ansprüche, enthaltend die Schritte:
vorläufiges Fixieren der Wischanlage (1) an der Kraftfahrzeugkarosserie durch Herstellen eines Formschlusses mit der Kraftfahrzeugkarosserie oder einem an der Kraftfahrzeugkarosserie festgelegten Bauteil (9) mittels eines Vorfixiermittels (15) der Wischanlage (1), und
endgültige Montage der vorläufig fixierten Wischanlage (1) an der Kraftfahrzeugkarosserie, **dadurch gekennzeichnet, dass** das Vorfixiermittel (15) im Endmontagezustand keinen Kontakt mehr zu der Kraftfahrzeugkarosserie oder dem an der Kraftfahrzeugkarosserie festgelegten Bauteil (9) hat.

7. Verfahren nach Anspruch 6,
**dadurch gekennzeichnet,**
**dass** die endgültige Montage mit Hilfe mindestens einer sich winklig zur Vertikalen erstreckenden, insbesondere als Zentrierschraube ausgebildeten, Fixierschraube (8) durchgeführt wird.

8. Kraftfahrzeug mit einer an diesem montierten Wischanlage (1) nach einem der Ansprüche 1 bis 5.

9. Kraftfahrzeug nach Anspruch 8,
**dadurch gekennzeichnet,**
**dass** in der Kraftfahrzeugkarosserie und/oder in einem an der Kraftfahrzeugkarosserie festgelegten Bauteil (9) mindestens eine als Langloch ausgebildete Ausnehmung (18) zur Aufnahme mindestens eines Hakenelementes (16, 17) der Wischanlage (1) vorgesehen ist.

## Claims

1. Wiper system for mounting in a motor vehicle having at least one drive motor and having at least one wiper shaft (4) which is driven by the drive motor, the wiper system (1) comprising a shaped part (5), on which prefixing means (15) are provided, by way of which a positively locking connection can be established with a component (9) which is fixed on a motor vehicle body, the component (9) having an internally threaded opening (21) and the shaped part (5) having a fixing opening (7), the two openings (21, 7) in each case having a longitudinal centre axis, the prefixing means (15) having at least one hook element (16, 17) for interacting in a positively locking manner with a corresponding recess (18) in the component (9) which is fixed on the motor vehicle body, which brings about a prefixed state, **characterized in that** the prefixing means (15) are configured and/or arranged in such a way that the longitudinal centre axis of the fixing opening (7) is spaced apart from the longitudinal centre axis of the internally threaded opening (21) in the prefixed state, and **in that**, in the finally mounted state, after final fixing of the wiper system (1) on the component (9) which is fixed on the motor vehicle body, the prefixing means do not make contact with the component (9) which is fixed on the motor vehicle body.

2. Wiper system according to Claim 1, **characterized in that** at least one fixing opening (7) for guiding through a fixing bolt (8) which is configured, in particular, as a centring bolt, is provided on the wiper system (1) for final mounting.

3. Wiper system according to Claim 2, **characterized in that**, in the mounted state of the wiper system (1), a longitudinal centre axis of the fixing opening (7) runs at an angle, preferably at an angle from a value range between approximately 45° and approximately 90°, preferably at an angle of approximately 90° with respect to the vertical.

4. Wiper system according to either of Claims 1 and 4, **characterized in that** the hook element (16, 17) has a first hook section (19) which points in the horizontal direction in the mounted state and a downwardly pointing second hook section (20) which is arranged at a right angle with respect to the said first hook section (19).

5. Wiper system according to either of Claims 1 and 4, **characterized in that** the prefixing means (15) has at least two hook elements (16, 17) which are arranged on longitudinal sides which lie opposite one another.

6. Method for mounting a wiper system according to one of the preceding claims, comprising the steps:
- provisional fixing of the wiper system (1) on the motor vehicle body by way of the establishing of a positively locking connection with the motor vehicle body or a component (9) which is fixed on the motor vehicle body, by means of a prefixing means (15) of the wiper system (1), and
- final mounting of the provisionally fixed wiper system (1) on the motor vehicle body, **characterized in that**, in the finally mounted state, the prefixing means (15) is no longer in contact with the motor vehicle body or the component (9) which is fixed on the motor vehicle body.

7. Method according to Claim 6, **characterized in that** the final mounting is carried out with the aid of at least one fixing bolt (8) which extends at an angle with respect to the vertical and is configured, in particular, as a centring bolt.

8. Motor vehicle having a wiper system (1) according to one of Claims 1 to 5 which is mounted on the said motor vehicle.

9. Motor vehicle according to Claim 8, **characterized in that** at least one recess (18) which is configured as a slot for receiving at least one hook element (16, 17) of the wiper system (1) is provided in the motor vehicle body and/or in a component (9) which is fixed on the motor vehicle body.

## Revendications

1. Système essuie-glace destiné à être monté dans un véhicule automobile, comprenant au moins un moteur d'entraînement et comprenant au moins un arbre d'essuie-glace (4) entraîné par le moteur d'entraînement, le système essuie-glace (1) comportant une pièce moulée (5) sur laquelle se trouvent des moyens de préfixation (15) qui permettent d'établir une complémentarité de formes avec un élément structural (9) calé sur une carrosserie de véhicule, l'élément structural (9) possédant une ouverture à filetage femelle (21) et la pièce moulée (5) une ouverture de fixation (7), les deux ouvertures (21, 7) possédant respectivement un axe central longitudinal,
les moyens de préfixation (15) possédant au moins un élément en crochet (16, 17) destiné à la coopération par complémentarité de formes avec un creux (18) correspondant dans l'élément structural (9) calé sur la carrosserie de véhicule, ce qui produit un état préfixé,
**caractérisé en ce que**
les moyens de préfixation (15) sont configurés et/ou disposés de telle sorte que l'axe central longitudinal de l'ouverture de fixation (7), à l'état préfixé, est espacé de l'axe central longitudinal de l'ouverture à filetage femelle (21), et **en ce que** les moyens de préfixation, à l'état de montage final, après une fixation définitive du système essuie-glace (1) sur l'élément structural (9) calé sur la carrosserie de véhicule, ne touche pas l'élément structural (9) calé sur la carrosserie de véhicule.

2. Système essuie-glace selon la revendication 1, **caractérisé en ce qu'**au moins une ouverture de fixation (7) destinée au passage d'une vis de fixation (8), notamment réalisée sous la forme d'une vis de centrage, se trouve sur le système essuie-glace (1) pour le montage définitif.

3. Système essuie-glace selon la revendication 2, **caractérisé en ce qu'**un axe central longitudinal de l'ouverture de fixation (7), à l'état monté du système essuie-glace (1), s'étend sous un angle donné, de préférence sous un angle dans une plage de valeurs entre environ 45° et environ 90°, de préférence sous un angle d'environ 90°, par rapport à la verticale.

4. Système essuie-glace selon l'une des revendications 1 ou 4, **caractérisé en ce que** l'élément en crochet (16, 17), dans un état monté, possède une première portion de crochet (19) orientée dans la direction horizontale et une deuxième portion de crochet (20) disposée perpendiculairement à celle-ci et orientée vers le bas.

5. Système essuie-glace selon l'une des revendications 1 ou 4, **caractérisé en ce que** les moyens de préfixation (15) possèdent au moins deux éléments en crochet (16, 17) disposés sur des côtés longs mutuellement opposés.

6. Procédé de montage d'un système essuie-glace selon l'une des revendications précédentes, comprenant les étapes suivantes :
- fixation provisoire du système essuie-glace (1) sur la carrosserie de véhicule en établissant une complémentarité de formes avec la carrosserie de véhicule ou élément structural (9) calé sur la carrosserie de véhicule par l'intermédiaire de moyens de préfixation (15) du système essuie-glace (1), et
- montage définitif du système essuie-glace (1) fixé provisoirement sur la carrosserie de véhicule, **caractérisé en ce que**
les moyens de préfixation (15), à l'état de montage final, n'ont plus aucun contact avec la carrosserie de véhicule ou avec l'élément structural (9) calé sur la carrosserie de véhicule.

7. Procédé selon la revendication 6, **caractérisé en ce que** le montage définitif est réalisé à l'aide d'au moins une vis de fixation (8), notamment réalisée sous la forme d'une vis de centrage, qui s'étend selon un certain angle par rapport à la verticale.

8. Véhicule automobile sur lequel est monté un système essuie-glace (1) selon l'une des revendications 1 à 5.

9. Véhicule automobile selon la revendication 8, **caractérisé en ce qu'**au moins un creux (18) réalisé sous la forme d'un trou oblong et destiné à accueillir au moins un élément en crochet (16, 17) du système essuie-glace (1) se trouve dans la carrosserie de véhicule et/ou dans un élément structural (9) calé sur la carrosserie de véhicule.
